**Europäisches Patentamt**

**European Patent Office**

**Office européen des brevets**

(19)

(11) Numéro de publication : **0 291 429 B1**

(12) **FASCICULE DE BREVET EUROPEEN**

(45) Date de publication du fascicule du brevet :
**18.12.91 Bulletin 91/51**

(51) Int. Cl.⁵ : **F16D 65/12, F16D 65/847, F16D 55/28**

(21) Numéro de dépôt : **88420157.5**

(22) Date de dépôt : **11.05.88**

(54) **Disque perfectionné pour frein à disque.**

(30) Priorité : **13.05.87 FR 8707011**

(43) Date de publication de la demande :
**17.11.88 Bulletin 88/46**

(45) Mention de la délivrance du brevet :
**18.12.91 Bulletin 91/51**

(84) Etats contractants désignés :
**DE ES GB IT SE**

(56) Documents cités :
**DE-A- 2 620 261**
**DE-A- 2 750 119**
**FR-A- 2 466 672**
**FR-A- 2 607 566**

(73) Titulaire : **CARBONE INDUSTRIE, Société Anonyme**
**"Les Mercuriales" 40 rue Jean-Jaurès**
**F-93176 Bagnolet Cédex (FR)**

(72) Inventeur : **Gassiat, Alain Louis**
**Le Vallon**
**F-33450 Montussan (FR)**

(74) Mandataire : **Ropital-Bonvarlet, Claude**
**Cabinet BEAU DE LOMENIE, 51, avenue Jean-Jaurès**
**F-69007 Lyon (FR)**

Jouve, 18, rue Saint-Denis, 75001 PARIS

## Description

La présente invention concerne un disque perfectionné pour frein à disque selon le préambule de la revendication 1.

Le domaine technique concerné est, plus spécifiquement, les freins mono ou multi-disques réalisés en carbone-carbone et mis en oeuvre pour freiner et/ou arrêter, spécifiquement mais non limitativement, la rotation d'organes tournants appartenant à des véhicules terrestres.

Dans les domaines techniques ci-dessus, il est fréquent de mettre en oeuvre des freins du type carbone-carbone, comportant au moins un disque rotor entraîné par la pièce tournante et coopérant avec, soit au moins un disque stator, soit des plaquettes de frottement portées par l'environnement fixe de la pièce tournante.

Selon les énergies devant être contrôlées, il est fréquent de réaliser le disque rotor en carbone-carbone et de lui faire comporter des moyens de ventilation destinés à permettre une régulation de la température de fonctionnement.

A cette fin, il est, généralement, prévu de conférer au disque rotor une forte épaisseur et de ménager, dans cette épaisseur, des canaux ou conduits d'orientation sensiblement radiale, tel que cela est connu par la demande FR-A-2466672. De tels canaux permettent une circulation centrifuge d'air, constituant un véhicule d'échange thermique régulant la température de fonctionnement. L'épaisseur nominale d'un tel disque tient, également, compte de la nécessité de transmettre le couple de freinage, ce qui conduit à réaliser les disques rotor en carbone-carbone sous une épaisseur notable.

Les impératifs ci-dessus ne permettent pas de produire et d'utiliser, à un prix de revient intéressant, des freins du type ci-dessus dont les disques exigent, de surcroît, un changement total dès que les épaisseurs des faces latérales ont subi un pourcentage d'usure tel qu'elles ne sont plus à même de transmettre le couple d'entraînement.

Le coût élevé de production et d'utilisation limite, notablement, l'application de tels freins dont les caractéristiques de freinage sont, par ailleurs, intéressantes.

L'objet de l'invention est de remédier aux inconvénients ci-dessus en proposant un disque perfectionné pour frein à disque, réalisé de manière à permettre la mise en oeuvre d'une matière noble de frottement, telle que le carbone-carbone ou autre matériau analogue, uniquement dans les parties actives du disque de frottement.

Un autre objectif est de proposer un disque perfectionné, conçu de manière à permettre une réalisation plus simple et moins coûteuse.

Un autre objectif de l'invention est de proposer un disque perfectionné dont les caractéristiques d'échange thermique peuvent être adaptées en fonction de l'application prévue.

Un objectif supplémentaire de l'invention est de proposer un disque perfectionné, notamment du type en carbone-carbone, offrant une possibilité de réutilisation et, par conséquent, d'abaissement du coût de fabrication et de mise en service.

Pour atteindre les objectifs ci-dessus, le disque perfectionné pour frein à disque, conforme à l'invention, est caractérisé en ce qu'il est composé d'une âme centrale de ventilation, montée flottante sur un tambour d'entraînement en rotation fixé sur la pièce tournante et de deux joues ou parements d'usure montés libres et flottants, de part et d'autre de l'âme sur le même tambour d'entraînement.

Diverses autres caractéristiques ressortent de la description faite ci-dessous en référence aux dessins annexés qui montrent, à titre d'exemples non limitatifs, des formes de réalisation de l'objet de l'invention.

La **fig. 1** est une demi-coupe élévation d'un frein comportant un disque perfectionné conforme à l'invention.

La **fig. 2** est une demi-élévation correspondant à la ligne II-II de la **fig. 1**.

La **fig. 3** est une perspective partielle illustrant une forme de réalisation de l'un des éléments constitutifs de l'objet de l'invention.

La **fig. 4** est une perspective partielle montrant une variante de réalisation de l'élément constitutif selon la **fig. 3**.

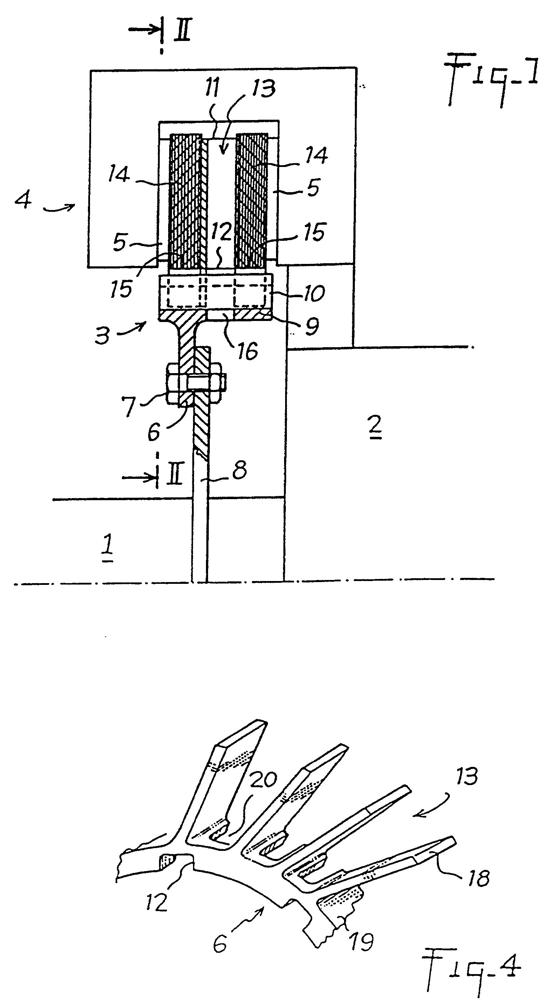

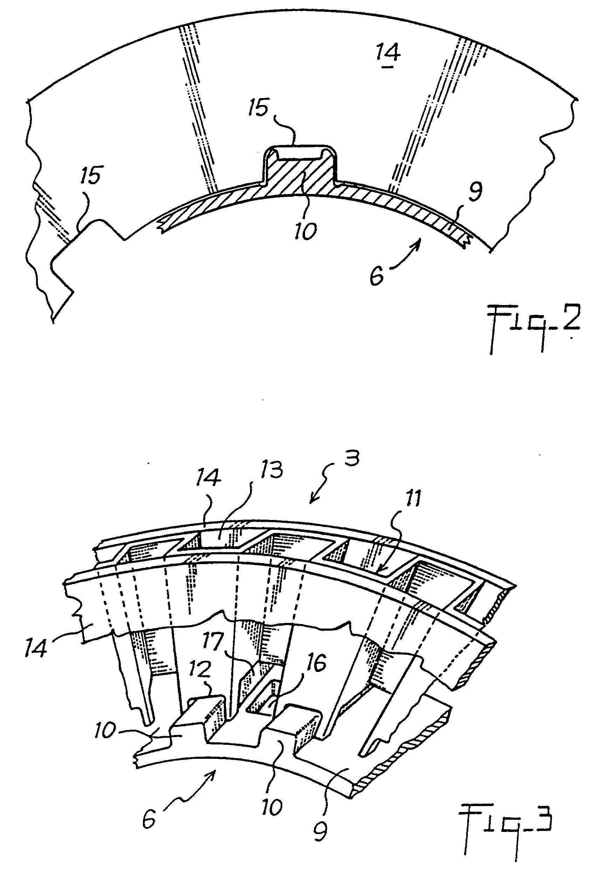

Selon les **fig. 1** et **2**, le disque perfectionné est illustré dans une application au freinage et à l'immobilisation d'une pièce tournante constituée par un arbre ou moyeu **1** monté dans un porte-moyeu fixe **2**. L'arbre **1** peut être de toute nature, en fonction de l'application envisagée et constituer, par exemple, le moyeu d'une roue de véhicule, par rapport auquel le porte-moyeu **2** fait partie de la structure porteuse.

Il doit être considéré que l'invention pourrait, également, s'appliquer à une disposition inverse dans un domaine d'application autre.

La **fig. 1** montre un exemple de réalisation d'un frein du type monodisque. Les dispositions de l'invention pourraient être mises en oeuvre, également, dans un frein du type multi-disque.

Dans l'exemple selon la **fig. 1**, le frein comprend un disque **3** dénommé rotor, destiné à coopérer avec au moins un organe fixe **4** de frottement. L'organe fixe **4** peut être un disque stator ou, comme illustré à la **fig. 1**, un étrier monté sur le porte-moyeu **2** pour chevaucher le disque **3**, de part et d'autre duquel il porte des plaquettes de frottement **5** actionnées en pincement du disque **3** par l'intermédiaire de tous moyens connus dans la technique du freinage.

Le disque rotor **3** comprend, selon l'invention, un tambour d'entraînement **6** qui est fixé par des boulons **7** sur un flasque **8** solidaire de la pièce tournante **1**. Le tambour d'entraînement **6** forme, à sa périphérie, une paroi cylindrique 9 comportant, de place en place, des dents 10 équidistantes angulairement, saillant vers l'extérieur. Les dents 10 sont destinées au montage des éléments constitutifs du disque 3 au sens de l'invention.

Le disque 3 comprend, tout d'abord, une âme centrale 11 réalisée en toute matière appropriée, capable de présenter des caractéristiques de résistance mécanique convenables en relation avec l'application visée et, notamment, le couple à transmettre. Le choix de la matière constitutive de l'âme centrale 1 est, également, effectué pour tenir compte d'une capacité d'échange thermique. L'âme centrale 1 peut, ainsi, être réalisée en fonte, en acier, en titane, en aluminium, voire en un matériau composite, le cas échéant aussi en carbone-carbone.

L'âme centrale 11 est réalisée de manière à comporter, sur son bord périphérique intérieur, des crans ou des encoches 12 destinés à permettre un montage flottant sur le tambour 6 en coopérant avec les dents 10.

L'âme centrale 11 est réalisée, par tout moyen de fabrication approprié à la nature de la matière constitutive choisie, de manière à ménager, dans son épaisseur, des canaux 13 établis entre les bords périphériques intérieur et extérieur au niveau desquels ils s'ouvrent. Les canaux 13 sont équidistants angulairement et présentent, dans l'exemple de réalisation selon la fig. 3, une disposition radiale. Selon une disposition préférée, les canaux 13 sont, alternativement, ouverts sur l'une et l'autre des faces latérales de l'âme 11. Les canaux 13 peuvent résulter d'usinage ou d'un mode de fabrication approprié de l'âme 11, tel qu'emboutissage, matriçage, moulage, etc...

Le disque 3 est, également, composé de deux joues ou parements de frottement et d'usure 14 qui sont, de préférence, réalisés en carbone-carbone ou autres matériaux de frottement. Les joues ou parements 14 sont massifs et monoblocs et présentent une épaisseur constante. Les joues ou parements 14 sont usinés ou réalisés, de manière à comporter, sur leur chant périphérique intérieur, des encoches ou crans 15 permettant le montage flottant sur les dents 10 du tambour 6. Les joues ou parements 14 sont montés sur le tambour d'entraînement 6, de part et d'autre de l'âme 11 vis-à-vis de laquelle ils sont libres et flottants par rapport au disque. Les joues ou parements 14 contribuent à fermer latéralement les canaux 13 s'ouvrant, successivement, sur l'une et l'autre des faces latérales de l'âme 11.

Les joues ou parements 14 représentent les pièces de frottement destinées à coopérer avec les parties fixes 5 réalisées en forme de plaquettes ou de disques stator.

Le tambour d'entraînement 6 est, par ailleurs, réalisé de manière à présenter, dans la partie centrale de sa paroi périphérique 9, des ouvertures ou lumières 16 ménagées de place en place ou, de préférence, en coïncidence avec certains au moins des canaux 13. La rotation du disque 3 permet, ainsi, d'entretenir une circulation d'air, de type centrifuge, empruntant les trous 16 puis les différents canaux 13 pour assurer un prélèvement des calories qui sont transmises à l'âme 11 par les joues ou parements 14 lors de leur coopération avec les organes de frottement 5, lorsqu'il convient de ralentir, voire d'arrêter la rotation de la pièce tournante 1.

L'âme 11 constitue, ainsi, une pièce, mécaniquement résistante, supportant les contraintes de pression appliquées sur les joues ou parements 14 par les pièces de frottement 5. L'âme 11 constitue, aussi, un échangeur thermique permettant de maintenir le disque 3 à une température favorable au bon fonctionnement du frein. A cette fin, l'architecture ou la structure de l'âme 11 peut donc être déterminée pour ajuster la fonction d'échange thermique, en fonction de l'application visée.

Le disque selon l'invention comprend, ainsi, trois pièces élémentaires, qui sont montées sur le même tambour d'entraînement, en étant flottantes par rapport à ce dernier et libres relativement. Cette structure est particulièrement adaptée à la compensation des dilatations différentielles résultant de la mise en oeuvre de matériaux différents pour la constitution des trois parties élémentaires ou, encore, résultant de l'imposition de températures différentes, en fonction des conditions d'utilisation.

Outre les avantages ci-dessus, il convient de noter que la structure du disque selon l'invention permet de réutiliser, à volonté, l'âme 11, tout en mettant en oeuvre des joues ou parements d'usure 14 susceptibles d'être réalisés en des matériaux présentant de grandes caractéristiques de frottement. Un disque 3 selon l'invention peut, ainsi, présenter des caractéristiques de freinage optimales, tout en étant d'un prix de fabrication et d'entretien inférieur aux disques réalisés de façon monobloc en une même matière.

Un autre objet de l'invention réside dans la possibilité de réaliser l'âme centrale 11 en un matériau, plus spécifiquement choisi en fonction de l'échange thermique, tout en réservant le choix d'un matériau adapté à la fonction de frottement, uniquement pour la constitution des joues ou parements d'usure 14.

Dans l'exemple de réalisation selon la fig. 3, les canaux 13 possèdent une orientation sensiblement radiale. Il peut être prévu de réaliser l'âme 11 pour conférer à ces canaux une orientation inclinée dans le sens de rotation du disque 3. Une telle orientation favorise, encore, la circulation centrifuge et contribue à améliorer les performances d'échanges thermiques de l'âme 11.

Dans ce qui précède, il est indiqué que certains au moins des canaux 13 sont en relation avec des lumières ou des trous 16 du tambour 6. Il peut être prévu de réaliser l'âme 11 de manière que les différents canaux **13** débouchent dans un dégagement inférieur ménagé dans le bord périphérique intérieur de l'âme **11**. Un tel dégagement, désigné par la référence **17**, permet une circulation périphérique à partir des trous **16** et un écoulement centrifuge dans les différents canaux **13**.

La **fig. 4** illustre une variante de réalisation selon laquelle l'âme **11** comporte, à sa périphérie, des ailettes **18** équidistantes angulairement, de disposition radiale ou non, contribuant à délimiter les canaux **13** en coopération avec les faces en vis-à-vis des joues ou parements d'usure **14** disposés de part et d'autre d'une telle âme.

Dans un tel cas, les ailettes **18** s'étendent à partir d'une couronne **19** dans laquelle sont ménagés les crans ou encoches **12**, ainsi que des ouvertures **20** pratiquées entre les différentes ailettes **18** pour permettre une admission d'air de refroidissement à partir des trous **16**.

## Revendications

1. Disque perfectionné, pour frein à disque du type comprenant au moins un disque rotor (3) délimitant dans son épaisseur des moyens de ventilation et monté sur une pièce tournante (1) pour coopérer avec au moins un organe fixe de frottement (4) pourvu de moyens (5) pouvant être commandés en course de pincement du disque rotor (3), caractérisé en ce que le disque rotor est composé d'une âme centrale (11) de ventilation, montée flottante sur un tambour (6) d'entraînement en rotation fixé sur la pièce tournante (1) et de deux joues ou parements d'usure (14) montés libres et flottants de part et d'autre de l'âme sur le même tambour d'entraînement.

2. Disque perfectionné selon la revendication 1, caractérisé en ce que l'âme centrale (11) délimite les canaux (13) en relation, pour certains au moins, avec des trous (16) ménagés dans le tambour d'entraînement.

3. Disque perfectionné selon la revendication 2, caractérisé en ce que les canaux (13) présentent une orientation radiale.

4. Disque perfectionné selon la revendication 2, caractérisé en ce que les canaux (13) sont inclinés dans le sens de rotation du tambour d'entraînement.

5. Disque perfectionné selon l'une des revendications 1 à 4, caractérisé en ce que les canaux sont, alternativement, ouverts sur l'une et l'autre face latérale de l'âme.

6. Disque perfectionné selon l'une des revendications 1 à 4, caractérisé en ce que les canaux sont délimités par des ailettes successives (18) formées par l'âme centrale et par les faces en vis-à-vis des deux joues ou parements.

7. Disque perfectionné selon la revendication 1 ou 2, caractérisé en ce que l'âme centrale et les joues ou parements sont montés sur le tambour par des crans ou encoches (12) coopérant avec des dents (10) saillant à la périphérie du tambour.

8. Frein à disque comportant un disque rotor selon l'une des revendications 1 a 7.

## Patentansprüche

1. Verbesserte Scheibe für Scheibenbremse von dem Typ mit wenigstens einer Rotor- oder Läuferscheibe (3), der in seiner Dicke Lüftungseinrichtungen begrenzt und auf einem drehenden Teil (1) angeordnet ist, um mit wenigstens einem festen Reibungsorgan (4) zusammenzuwirken, das mit Einrichtungen (5) versehen ist, die beim Einklemmen der Rotorscheibe (3) gesteuert werden können, **dadurch gekennzeichnet,** daß die Rotorscheibe aus einer zentralen Lüftungsseele (11) gebildet ist, die schwimmend auf einer Drehantriebstrommel (6) aufgebracht ist, die an dem drehenden Teil (1) befestigt ist, und aus zwei Backen oder Abnützungsverblendungen (14) gebildet ist, die frei und schwimmend beiderseits der Seele auf derselben Antriebstrommel angeordnet sind.

2. Verbesserte Scheibe nach Anspruch 1, **dadurch gekennzeichnet,** daß die zentrale Seele (11) die Kanäle (13) begrenzt, von denen wenigstens manche mit Löchern (16), die in der Antriebstrommel ausgebildet sind, in Verbindung stehen.

3. Verbesserte Scheibe nach Anspruch 2, **dadurch gekennzeichnet,** daß die Kanäle (13) eine radiale Ausrichtung aufweisen.

4. Verbesserte Scheibe nach Anspruch 2, **dadurch gekennzeichnet,** daß die Kanäle (13) in Drehrichtung der Antriebstrommel geneigt sind.

5. Verbesserte Scheibe nach einem der Ansprüche 1 bis 4, **dadurch gekennzeichnet,** daß die Kanäle abwechselnd auf der einen und der anderen seitlichen Seite der Seele offen sind.

6. Verbesserte Scheibe nach einem der Ansprüche 1 bis 4, **dadurch gekennzeichnet,** daß die Kanäle durch aufeinanderfolgende Zungen (18) begrenzt sind, die durch die zentrale Seele und durch die Seiten gegenüber den beiden Backen oder Verblendungen gebildet werden.

7. Verbesserte Scheibe nach Anspruch 1 oder 2, **dadurch gekennzeichnet,** daß die zentrale Seele und die Backen oder Verblendungen auf der Trommel durch Rastkerben oder Nuten (12) aufgebracht sind, die mit am Umfang der Trommel vorspringenden Zähnen (10) zusammenwirken.

8. Scheibenbremse mit einer Rotorscheibe nach einem der Ansprüche 1 bis 7.

## Claims

1. Improved disk for disk-brake of the type comprising at least one rotor disk (3) defining ventilation means in its thickness and mounted on a rotary part (1) for cooperating with at least one fixed friction member (4) equipped with means (5) which can be controlled to perform a clamping stroke on the rotor disk, disk characterized in that the rotor disk is composed of a central ventilation web (11), slidably mounted on a drum (6) driving it in rotation and fixed on the rotary part (1), and of two wear surfaces or flanges (14) which are mounted freely and slidably on either side of the web on the same driving drum.

2. Improved disk according to claim 1, characterized in that the central web (11) defines channels (13), some at least of which communicate with holes (16) provided in the driving drum.

3. Improved disk according to claim 2, characterized in that the channels (13) are radially oriented.

4. Improved disk according to claim 2, characterized in that the central channels (13) are inclined in the direction of rotation of the driving drum.

5. Improved disk according to one of claims 1 to 4, characterized in that the channels are open on one of the side faces of the web and on the other, alternately.

6. Improved disk according to one of claims 1 to 4, characterized in that the channels are defined by successive blades (18) formed by the central web and by the opposite faces of the two surfaces or flanges.

7. Improved disk according to claim 1 or 2, characterized in that the central web and the surfaces or flanges are mounted on the drum via recesses or notches (12) which cooperate with teeth (10) projecting on the periphery of the drum.

8. Disk-brakes comprising a rotor disk according to one of claims 1 to 7.

Fig-1

Fig-4

Fig-2

Fig-3